# EUROPEAN PATENT APPLICATION

(11) **EP 2 851 348 A1**
(43) Date of publication of application: **25.03.2015**
(21) Application number: 13004612.1
(22) Date of filing: 23.09.2013
(51) Int. Cl.: C03B 27/04, C03B 27/044, C03B 29/02, C03B 40/00

(54) **Method for manufacturing toughened textured glass**

(71) Applicant: Investland Sp. Z O. O., 38-457 Zrecin (PL)
(72) Inventor: Zrebiec, Tomasz, 38-400 Krosno (PL)

(57) **Abstract**

The glass pane after fusing, instead of intermediate annealing, is submitted to two-stage controlled process of free or forced cooling, first on the ceramic mould and then of the pane itself. While fusing the glass pane laid on a ceramic mould is heated to the temperature from 750°C up to 850°C, submitted to fusion process at the final heating temperature, and then removal of from the furnace takes place along with the ceramic mould and is cooled down in a natural or forced manner together with the ceramic mould to the temperature in the range between the temperature of glass softening and the lower temperature of glass annealing, that is beneficially for the soda-lime float glass within the scope of temperature from 560 up to 600°C. Having reached such a temperature the glass pane is turned over, separated from the ceramic mould and cooled down in a natural or forced manner until the temperature measured on the pane's surface corresponds to the temperature of the glass transformation point in its centre, while assuming parabolic profile of the temperature in the cross-section of the glass pane, which for the pane from the soda-lime float glass, of the thickness from 19 to 3 mm favourably amounts to from 505 up to 537°C. Then in the heating chamber of the hardening furnace, the surface layers of the glass pane are reheated in order to achieve inverted temperature profile to the condition, in which glass transformation temperature prevails at the centre of the glass pane, whereas on the glass surface such temperature is higher by at least 80 °C up to 100 °C, and then the pane is shifted to rapid quench zone in the hardening furnace and cooled on the both sides, with a forced airflow of the efficiency ensuring acquisition of the compressive stress at the pane surface of the value amounting to at least 69 MPa.

## Description

The subject-matter of the invention is the method for manufacturing toughened textured architectural glass within the process eliminating intermediate glass annealing.

There are methods for manufacturing textured architectural glass including the process of fusion or bending, conducted in five main stages, namely: heating in the furnace up to the temperature of glass fusion or deformation; maintaining the temperature of heating within the agreed time period; quick cooling to the temperature of glass annealing; glass annealing in order to remove any internal tension; cooling to the temperature close to the ambient temperature. If it is necessary to toughen the textured architectural glass, the surface layers of the pane are reheated to the temperature higher by dozens of degrees than the transformation temperature and then rapidly quenched. The heating rate in relation to the temperature diffusion coefficient plays a vital role in this process. Using incorrectly selected heating rate may lead to deformations in case of thinner panes or to cracks when the panes are thicker. Due to batch nature of the fusion process, toughening of the textured architectural glass requires long-term execution and plenty of energy, especially during the cooling process after fusion.
Based on the patent specification GB 1509644, we are familiar with the process of changeable heating of the layers forming the glass pane, the process has been used mainly for fusion of glass layers of various thicknesses. Based on the patent specification JP 2011225452 we are familiar with the process of heating of the glass pane on the roller conveyor by means of zone heaters.

The objective of the hereby invention is to eliminate the problems related to long period of annealing of the textured architectural glass after the glass fusion process along with its energy consumption.

Such objective has been achieved in the solution based on the invention, in which the glass pane after completion of the fusion process, instead of intermediate annealing, is submitted to two-stage controlled process of free or forced cooling, first on the ceramic mould and then of the pane itself, after rotating it by 180° and removing from the ceramic mould. The operation of fusing and representing the relief on the glass takes place in the glass fusing furnace, while the glass pane laid on the ceramic mould is heated to the temperature from 750°C up to 850°C, and then the pane is submitted to fusion process at the final heating temperature. After completion of the process the fused glass pane is removed from the furnace along with the ceramic mould and cooled down in a natural or forced manner together with the ceramic mould to the temperature in the range between the temperature of glass softening and the lower temperature of glass annealing, that is beneficially for the soda-lime float glass within the scope of temperature from 560 up to 600°C.
Having reached such a temperature the glass pane is turned over, then the pane is separated from the ceramic mould and cooled down in a natural or forced manner until the temperature measured on the pane's surface corresponds to the temperature of the glass transformation point in its centre, while assuming parabolic profile of the temperature in the cross-section of the glass pane, which for the pane from the soda-lime float glass, of the thickness from 19 to 3 mm favourably amounts to from 505 up to 537°C. Next, after introducing the glass pane to the heating chamber of the hardening furnace, the surface layers of the glass pane are reheated in order to achieve inverted temperature profile to the condition, in which glass transformation temperature prevails at the centre of the glass pane, whereas on the glass surface such temperature is higher by at least 80 °C up to 100 °C. Then the pane is shifted to rapid quench zone in the hardening furnace and cooled on the both sides, with a forced airflow of the efficiency ensuring acquisition of the compressive stress at the pane surface of the value amounting to at least 69 MPa. Removal of a hot pane from the furnace z along with the ceramic mould is carried out on a slidable furnace hearth, whereas separation of the glass pane from the ceramic mould takes place by rotation of the pane by 180° in relation to the horizontal axis and laying its surface that is opposite to the ceramic form on a transport pallet for further operations performed outside the fusing furnace.

The advantage of such a process of manufacturing toughened textured architectural glass is elimination of intermediate glass annealing and achievement of related time and energy savings. An additional advantage of such a process is no need to modify of the fusion process itself, for example by means of necessity to use ceramic moulds of special construction or special material for their execution.
En exemplary execution of the process of manufacturing toughened textured architectural glass has been described below:
Float glass of the dimensions 2000 x 800 x 4 mm is laid on a mould made of aluminosilicate fibrous materials and submitted to fusion process according to the table below:

| Process stage | Temperature range [°C] | Time [s] |
|---|---|---|
| 1 (heating) | 25 - 550 | 360 |
| 2 (holding) | 550 | 120 |
| 3 (heating) | 550 - 815 | 360 |
| 4 (fusing) | 815 | 90 |

After completion of the fusion process the heating dome of the furnace is raised, movable furnace heath is fed and the hot pane on a ceramic mould is shifted onto the positioner's arm and submitted to the process of free cooling on the mould for the period of 75 seconds. After reaching the temperature of 610 °C, the pane along with the mould is covered by the second arm of the positioner, rotated by 180°, and after separation from the mould, the pane is shifted on the rollers of the input transporter to the hardening furnace. The free-cooling process of the pane itself is further carried out by the period of 20 seconds until reaching by the surface the temperature of 532 °C. Having reached such a temperature, the pane is introduced to the heating chamber of the hardening furnace, heated up to the temperature of 690 °C and is heated for 9.5 seconds, until the pane's surface reaches the temperature of 640 °C, with a simultaneous maintenance of the temperature in the core amounting to about 550 °C. Such thermally prepared glass pane with inverted temperature profile is shifted with the speed of 2.5 m/s to the rapid quench section and submitted to bilateral blow-in of cold air of the pressure 85 mbar on the first three rows of nozzles and 22 mbar on the remaining nozzles. After reducing the surface temperature by about 250 °C, the pane is shifted to the quench section, where it is submitted to bilateral exposition to cooling air of the pressure 22 mbar and in such a manner it reaches the ambient temperature. The measured compressive stress on the pane's surface amounts to 98 MPa. The process should be conducted with the use of roller transport devices, which surfaces have wound from the ceramic cord, resistant to the temperatures exceeding 650 °C.

The method for manufacturing toughened textured architectural glass may be used especially during the fusion process of the float glass.

## Claims

1. The method for manufacturing toughened textured architectural glass within the process eliminating intermediate glass annealing **characterized in that** the glass pane after completion of fusion, instead of intermediate annealing process is submitted to two-stage controlled process of free or forced cooling, first on the ceramic mould and then of the pane itself, after rotating it by 180° and removing from the ceramic mould, whereas the operation of fusing and representing the relief on the glass takes place in the glass fusing furnace, while the glass pane laid on the ceramic mould is heated to the temperature from 750°C up to 850°C, and then the pane is submitted to fusion process at the final heating temperature, and after completion of the process the fused glass pane is removed from the furnace along with the ceramic mould and cooled down in a natural or forced manner together with the ceramic mould to the temperature in the range between the temperature of glass softening and the lower temperature of glass annealing, which is beneficial for the soda-lime float glass within the scope of temperature from 560 up to 600°C, and after having reached such a temperature the glass pane is turned over, then the pane is separated from the ceramic mould and cooled down in a natural or forced manner until the temperature measured on the pane's surface corresponds to the temperature of the glass transformation point in its centre, while assuming parabolic profile of the temperature in the cross-section of the glass pane, which for the pane from the soda-lime float glass, of the thickness from 19 to 3 mm favourably amounts to from 505 up to 537°C, then after introducing the glass pane to the heating chamber of the hardening furnace, the surface layers of the glass pane are reheated in order to achieve inverted temperature profile to the condition, in which glass transformation temperature prevails at the centre of the glass pane, whereas on the glass surface such temperature is higher by at least 80 °C up to 100 °C. Then the pane is shifted to rapid quench zone in the hardening furnace and cooled on the both sides, with a forced airflow of the efficiency ensuring acquisition of the compressive stress at the pane surface of the value amounting to at least 69 MPa.

2. The method for manufacturing toughened textured architectural glass according to claim 1, **characterized in that** the removal of a hot pane from the furnace z along with the ceramic mould is carried out on a slidable furnace hearth, whereas separation of the glass pane from the ceramic mould takes place by rotation of the pane by 180° in relation to the horizontal axis and laying its surface that is opposite to the ceramic form on a transport pallet for further operations performed outside the fusing furnace.
